# EUROPEAN PATENT APPLICATION

(11) **EP 1 045 355 A1**
(43) Date of publication of application: **18.10.2000**
(21) Application number: 99116347.8
(22) Date of filing: 19.08.1999
(51) Int. Cl.: G08C 17/02, G08C 23/04, H04M 1/72

(54) **Mobile terminal and method for controlling one or several devices in a predetermined area**

(30) Priority: 16.04.1999 WO PCT/EP99/02593
(71) Applicant: Sony International (Europe) GmbH, 50829 Köln (DE)
(72) Inventor: Winkler, Gregor, Sony International (Europe) GmbH, 85609 Aschheim-Dornbach (DE)
(74) Representative: Körber, Martin, Dipl.-Phys.

(57) **Abstract**

The present invention relates to a mobile terminal (400) for a wireless telecommunication system and a method for controlling settings or functions of one or more devices within a predetermined area by means of such a mobile terminal. A mobile terminal (400) according to the present invention comprises transmitting and receiving means (420) for transmitting and receiving user and control signals of the wireless telecommunication system, generating means (415) for generating control signals of a wireless control system said control signals comprising control information for controlling settings or functions of one or more devices within a predetermined area, whereby said wireless control system is different from and has a shorter transmission range than said wireless telecommunication system, and transmitting means (414) for transmitting said control signals to one or more of said devices within said predetermined area. With the mobile terminal (400) according to the present invention, operation in a normal wireless telecommunication system and also controlling of devices at home is possible in a simple way by a single terminal.

## Description

The present invention relates to a mobile terminal for a wireless telecommunication system and a method for controlling settings or functions of one or more devices within a predetermined area by means of such a mobile terminal.

Mobile devices for controlling settings or functions of devices are known in a large variety of technical fields. For example, compact disc players or video recorders are remotely controlled by means of mobile devices on the basis of infrared transmission. However, for each device in a house or an apartment, for example video recorders, dish washers, washing machines, microwave ovens, TV sets and so on, a single mobile device is necessary for controlling the settings or functions of the respective apparatus. Although mobile devices for controlling a group of different devices are known, these mobile devices only operate in one single wireless control system, for example an infrared transmission system. Thus, in a usual household, an increasing number of mobile devices is available for controlling the different apparatuses. On the other hand, mobile terminals for wireless telecommunication systems become more and more widespread and have already reached a very high penetration rate in the population. Such mobile terminals are highly personalized so that often every family member of a family has his or her own mobile terminal. Therefore, a family having several family members living together in one household usually possesses a number of mobile terminals for communicating in a wireless telecommunication system as well as mobile devices for controlling the electronic devices usually present in a modern household, such as CD players, video recorders, TV sets or the like. This high number of different mobile devices and mobile terminals is not practical, since one has to look always for the correct device or terminal to control a respective electronic apparatus.

The object of the present invention is therefore to provide a possibility of reducing the mobile devices or mobile terminals available in a household.

The above object is achieved by a mobile terminal for a wireless telecommunication system, with transmitting and receiving means for transmitting and receiving user and control signals of the wireless telecommunication system, generating means for generating control signals of a wireless control system, said control signals comprising control information for controlling settings or functions of one or more devices within a predetermined area, whereby said wireless control system is different from and has a shorter transmission range than said wireless telecommunication system, and transmitting means for transmitting said control signals to one or more of said devices within said predetermined area.

The above object is further achieved by a method for controlling settings or functions of devices within a predetermined area by means of a mobile terminal of a wireless telecommunication system, said portable terminal comprising transmitting and receiving means for transmitting and receiving user and control signals of the wireless telecommunication system, comprising the steps of generating control signals of a wireless control system in said portable terminal, said control signals comprising control information for controlling settings or functions of one or more devices within said predetermined area, whereby said wireless control system is different from and has a shorter transmission range than said wireless telecommunication system, and transmitting said control signals to one or more of said devices within said predetermined area.

Mobile terminals (like phones or digital organizers) are evolving to a standard device which is accompanying the human being. On the other side the different needs of each person would require a very flexible system when people intend to use an automated control system for their environment. Furthermore, the automated control system should not cause any maintenance cost. By implementing a wireless control system into a mobile terminal of a wireless telecommunication system, the user can reuse common parts like display, buzzer, information entry possibilities (keypad, touchpad, processor,...). Furthermore, the user does not have to pay airtime cost for the wireless control system if this is separated from the telecommunication system, which reduces the maintenance cost and increases the acceptance.

By using a different air-interface of the wireless control system a different (shorter) control range of the control system can be chosen, which gives the following advantages:
- reduced interference's between users (e.g. fast frequency hopping)
- more localized detection of the mobile control unit
- optimizing the air interface for low power consumption

The wireless control system implemented in the mobile terminal can configure, control and inform the user about the state of the device to be controlled. This process can be performed for different devices to be controlled independently at the same time.

Preferably, the control signals of the wireless control system for controlling the usual functions of the devices within a household or another predetermined area are transmitted on a secured communication channel, so that an intentional manipulation, as e. g. the deactivation of the alarm system of the household, or an unintentional manipulation, as e. g. switching the stove on, is not possible. Thereby, every mobile terminal could have a unique identification, which could be used for an authentication in a receiving device of the household or predetermined area. Thereby, the different devices of the predetermined area to be controlled by the mobile terminal of the present invention have to contain knowledge about the mobile devices which are allowed to have access, i. e. knowledge about the identification numbers allocated to mobile terminals of the family members of a household. A mobile terminal having an identification number not belonging to this household will not be able to control the devices in the household. Alternatively, a specifically allocated encryption algorithm could be used for the particular mobile terminals allocated to the household. Only the particularly encrypted identification information is then recognized by the devices to be controlled.

Furthermore, the control system can also act dependent on the reception of controlled information (e.g. receiving a service note from the car, which adds an open task in the personal organizer to get an appointment at the service station, information like what has to be serviced and a service number could be received and added to the task) or detection of certain service areas (e.g. detection of the work desk will activate the call divert to the work desk number where as the detection of the home area will switch on the divert to the voice mail).

To ease implementation of the application existing air interfaces like Blue tooth, Home RF-SWAP IEEE802.11 or DECT could be used.

Advantageously the transmitting means for transmitting control signals according to the present invention regularly broadcasts this control signals.

This can be used to ensure that the devices within the predetermined area will be controlled only as long as the mobile terminal is in the range of the devices, e.g. within an apartment. When the mobile terminal is moving out of the range or is not detected any more by the devices (e.g. stove, alarm system), the devices are switching back into a fail safe operation mode.

Advantageously said control signals are only generated and transmit by said transmitting means when a receiving means of said mobile terminal receives signals from one of said devices within said predetermined area.

The operational time of a mobile terminal is determined by the battery capacity and the power consumption of the terminal. By implementing that the terminal only starts operating when it detects a service area (predetermined area) the active duty cycle is reduced which leads to a reduced average power consumption and therefore for an increased operational time.

The devices which are located in the predetermined area are normally fixed installed and are connected to a power supply system which does not cause any limitation on the operational time.

Advantageously said control signals comprise control information only for one of the devices in said predetermined area, whereby said one device controls settings or functions of other devices in said predetermined area.

By setting functions and controlling devices of only one device, whereby this device could control other devices, other existing networks, could be used. This device could function as an interface to wired networks.

This also has the advantage, that certain functions could be activated and coordinated even when the mobile terminal has, due to its range limitations, not the possibility to control settings or functions of a unit which is out of reach (start the heating in the basement) or coordinating two units at the same time which are in two regions (e.g. watching TV and increase the heating in the basement).

Furthermore, this gives the possibility to control settings or functions of other devices which have a lead time (leaving the house and the garage door starts opening) before the mobile terminal gets actually in the range of these devices.

Advantageously said control signals comprise control information to directly control settings or functions of devices within said predetermined area.

By setting functions or controlling devices directly the mobile terminal reaches only the devices which are in the range of the wireless control system. This could for example be useful for a person with a mobile terminal entering and moving around in an office building is only switching on the lamps in his range.

Advantageously said transmitting means transmits said control signals in a frequency of the radio frequency range different from the frequency range of the wireless telecommunication system.

Separating the control function from performing functions for the wireless telecommunication system allows to completely disable function blocks for the wireless telecommunication system, thereby eliminating any associated power consumption and undesirable or dangerous interference to other services or devices in the area to be controlled. The shape and size of the area controlled by such a control method can therefore be determined and chosen independently from the conditions that apply to the wireless telecommunication system. This can be achieved by choosing the transmission means for said control signals to that their range is determined by the propagation and obstacle penetration characteristics of said control signals.

Using a short wavelength (typically decimeters or less) for said control signals allows to plan / predetermine the range and intended absorption in obstacles to limit the range. Natural propagation of RF waves causes a path attenuation which is proportional to 4π/λ*d², where d is the distance between transmitter and receiver and λ is the wavelength used. Typical home or office environments create even larger wave attenuation typically proportional to 4π/λ*d³ above a distance of about 10 meters.

In one advantageous method and embodiment of the invention said frequency is in the GHz range.

Advantageously said transmitting means transmits said control signals as infrared signals.

This will ensure that said transmitting and receiving means can be implemented in a very cost effective way.

This will also ensure that said transmitting and receiving means will not cause or suffer from any electromagnetic or electrostatic interference.

This will further ensure that the range of said control area will be substantially determined by line-of-sight-restrictions.

Advantageously said transmitting means has a transmission power to transmit said control signals in a range of up to 50m.

This will ensure that said transmission power consumption can be fulfilled by battery, rechargeable, or solar power cells.

This will also ensure that said transmission power will cause only negligible interference.

The present invention is explained in more detail in the following description relating to the enclosed drawings, in which
figure 1 shows a general example of a cell of a wireless telecommunication system in which a predetermined area is implemented, within which devices are controlled on the basis of a wireless control system different from the wireless telecommunication system,
figure 2 shows a first example of a mobile terminal according to the present invention controlling one device on the basis of the wireless control system whereby the control device communicates with other devices in the predetermined area,
figure 3 shows a mobile terminal according to the present invention controlling several devices within a predetermined area on the basis of the wireless control system at the same time,
figure 4 shows schematically a mobile terminal according to the present invention, and
figure 5 shows schematically an example of a predetermined area, i. e. an apartment, in which a mobile terminal according to the present invention controls several devices on the basis of a wireless control system.

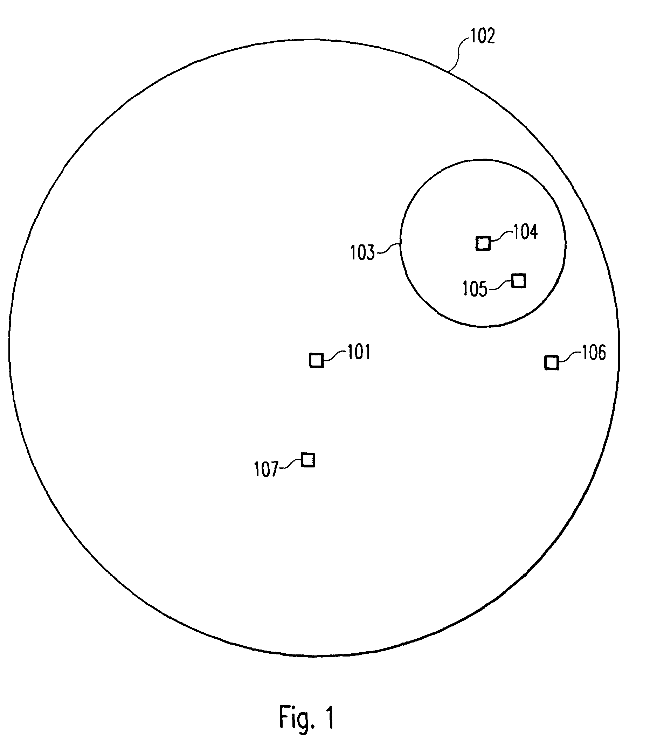

Figure 1 shows a general example of a wireless telecommunication system with a base station 101 for transmitting and receiving user and control signals to and from mobile terminals 105, 106 and 107 within the range 102. The range 102 corresponds to the cell of the telecommunication system, to which the base station 101 is allocated. All mobile terminals 105, 106 and 107 are able to communicate with the base station 101 on the basis of the wireless telecommunication system, e. g. the GSM system, since they are within the range 102 of the respective cell.

Within the range 102 of the cell of the telecommunication system controlled by the base station 101, a predetermined area 103 is located. The predetermined area may e. g. be an apartment, a house or the like having an extension smaller than the range 102 of the cell of the telecommunication system. Within the predetermined area 103, a device 104 is located, settings or functions of which can be controlled on the basis of control information transmitted from the mobile terminal 105 within the predetermined area 103. The mobile terminal 105 is a mobile terminal according to the present invention, which is able to communicate with a base station 101 of the wireless telecommunication system and is able to generate and transmit control signals of a wireless control system for controlling settings or a function of the device 104 within the predetermined area 103. The wireless control system is different from and has a shorter transmission range than the wireless telecommunication system. The device 104 within the predetermined area may e. g. be a stove, a television set or the like. The mobile terminal 105, upon entering the predetermined area 103, controls settings or functions of the device 104 automatically by broadcasting the control signals or transmits corresponding control signals to the device 104 only upon receiving respective presence signals from the device 104 indicating that the device 104 is activated.

Further, the mobile terminal 105 can further communicate with the other mobile terminals 106 and/or 107 via the base station 101 and inform them about the settings of the device 104 or his own changed settings. E. g., the device 104 could be a voice-activated camera connected to a baby phone in a baby room, whereby the device 104 sends, upon detection of a cry, voice and picture data to the mobile terminal 105 or triggers an SMS message. The voice and picture data or the SMS message can then be directed from the mobile terminal 105 via the base terminal 101 to another mobile terminal. Further, an active control is also possible, which means that the mobile terminal 105 could be called up and asked for a snapshot of the noise level and some pictures taken by the device 104.

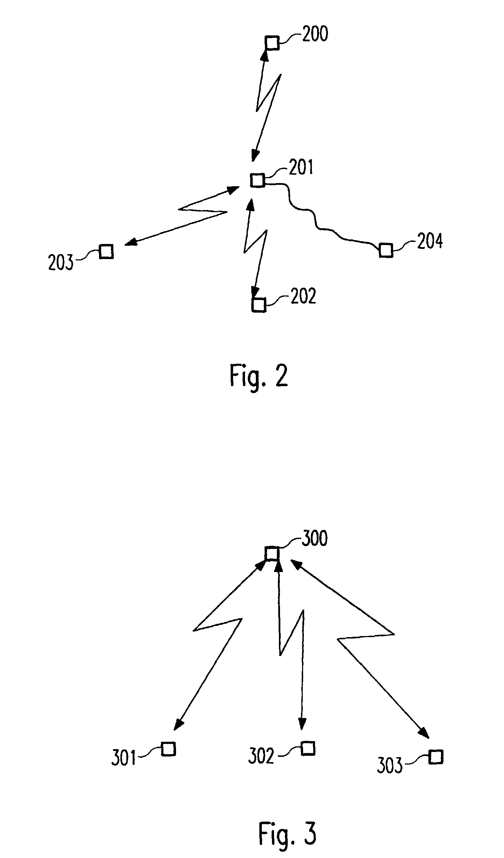

Figure 2 shows a schematic example of controlling the settings or functions of one device 201 within a predetermined area by a mobile terminal 200 according to the present invention. The mobile terminal 200 within a predetermined area generates and transmits control signals to a device 201 only, whereby the device 201 acts as a master unit and controls other devices 202, 203 and 204 within the predetermined area. Thereby, the device 201 controls the device 204 over a wired connection and the other devices 203 and 202 by means of a wireless system. This wireless system may be the same as the control system used for communication between the mobile terminal 200 and the device 201 or may be a different system. Thereby, the other devices 202, 203 and 204 may act as slave units of the device 201 acting as a master unit. This possibility has the advantage that a mobile terminal 200 entering a predetermined area only has to control one central master unit device 201 located in an easy accessible position. Other devices within the predetermined area, which are out of reach of the mobile terminal 200 may thereby be controlled through this master unit device 101.

Figure 3 shows a possibility of controlling several devices 301, 302 and 303 within a predetermined area at the same time. A mobile terminal 300 according to the present invention entering the or being located within the predetermined area transmits control signals to some or all devices within the predetermined area at the same time and independently from one another.

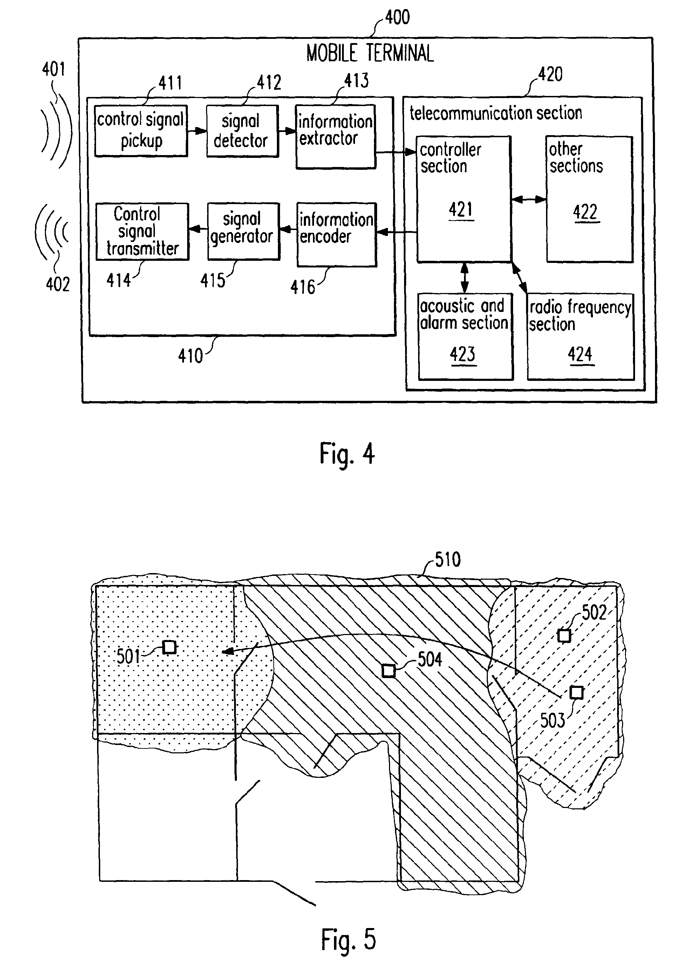

Figure 4 shows a block diagram of a mobile terminal 400 according to the present invention. The mobile terminal 400 comprises a telecommunication section 420 for communicating in the wireless telecommunication system and a control signal section 410 for transmitting and receiving control signals in the wireless control system. The wireless control system is different from the wireless telecommunication system so that interference between the two systems is avoided.

The telecommunication section 420 comprises a control section 421 for controlling the transmission and reception of signals in the wireless telecommunication system and a radio frequency section 424 for up- and downconverting signals. The radio frequency section 424 is connected to an antenna for the communication in the wireless telecommunication system. Further, the telecommunication section 420 comprises an acoustic and alarm section 423, e. g. comprising a loudspeaker and a microphone. The control section 421 is further connected to other sections 424 as memories, displays and the like necessary elements for the communication in the wireless telecommunication system.

The control signal section 410 picks up control signal energy 401 of control signals transmitted from a device within a predetermined area indicating that the mobile terminal 400 has entered or is located within the predetermined area. The control signal energy 401 picked up by the control signal pickup means 411 is supplied to a signal detector 412 for detecting and demodulating the control signal picked up from the control signal pickup means 411. The detected and demodulated control signals are supplied to an information extractor 413 which recognizes relevant control signals for the mobile terminal 400 and forwards the extracted information to the control section 421 of the telecommunication section 420. The control section 420 then, in response to the received extracted information, triggers a necessary action. The necessary action can be the transmission of all the or parts of the information received to other mobile terminals via the radio frequency section 424, to ask for a user interaction via the section 423, to reply to the device having transmit the control signals as pre-programmed in the control section 421 to change settings or functions of the device, or to change the behaviour of the mobile terminal 400 ask pre-programmed in the control section 421. The reply to the device having sent the control signals is performed by coding the necessary control information in an information encoder 416, generating an RF control signal in the signal generator 415 and transmitting the control signal via the control signal transmitter 414. The control signal energy 402 transmitted from the control signal transmitter 414 is then received by the device or the devices within the predetermined area to change their functionalities or settings. Thereby, the control signal transmitter 414 may regularly broadcast the control signals to assure that the devices to be controlled within the predetermined area are reached.

Alternatively to the above-explained scheme, the mobile terminal 400 may, upon entering a predetermined area, generate and transmit control signals via the control signal transmitter 414 before receiving respective control signals from one or more devices within the predetermined area. Then, the one or more devices within the predetermined area receive the control signals transmitted from the control signal transmitter 414 of the mobile terminal 400, generate respective response control signals and transmit the response control signals back to the mobile terminal 400, where they are received by the control signal pickup means 411 and then further processed. Thus, in this alternative the mobile terminal 400 starts the communication with the devices in the predetermined area. In the first alternative explained above, one or more of the devices located within a predetermined area start the communication by sending control signals to the mobile terminal 400 entering the predetermined area.

Additionally or alternatively to the two above-mentioned schemes, the mobile terminal 400 may receive, e. g. from a base station of the wireless telecommunication system, a request to set or control functions of one or more devices within the predetermined area. The correspondingly received request from the base station is received in the radio frequency section 424, and then downconverted, demodulated and processed in the control section 421. The control section 421 then controls the information encoder 416 to code corresponding control information. The signal generator 415 then generates a RF signal from the coded information, supplies the RF signal to a control signal transmitter 414 which transmits a corresponding control signal to the one or more devices to be controlled within the predetermined area.

In a very simple embodiment of the mobile terminal 400 according to the present invention, the mobile terminal does not need to comprise the control signal pickup means 411, the signal detector 412 and the information extractor 413. In this case, the mobile terminal 400 regularly broadcasts control signals to respective devices in the predetermined area without receiving respective control signals from the devices.

In figure 5, an example of a predetermined area according to the present invention, namely an apartment 510, and the control of several devices 501, 502 and 504 in the apartment by means of a mobile terminal 503 according to the present invention is shown. The mobile terminal 503 may e. g. have a structure as the mobile terminal 400 shown in figure 4. The mobile terminal 503, upon entering the apartment 510, is able to receive and transmit control signals on the basis of the wireless control system to the devices 501, 502 and 504 being located in a respective room of the apartment 510. E. g., device 502 may be an alarm system so that the mobile terminal 503, upon entering the apartment, sends control signals to the alarm system first to the deactivate the alarm. Assumed that the mobile terminal 503 has a range which corresponds essentially to the size of the rooms, the mobile terminal 503 only reaches the device 502 first. Then, upon entering the next room, the mobile terminal 503 communicates with the device 504, which may e. g. be a TV set, a stove, a light switch or the like. Then, upon entering the last room, the mobile terminal 503 exchanges control signals with the device 501, which may e. g. be a computer, a telephone answering machine or the like. Another possibility is that each of the devices 501, 502 and 504 is an separate alarm system for each of the rooms, so that the mobile terminal 503, upon entering each room, deactivates the respective alarm system in the room.

In the following, possible technical implementations of the wireless telecommunication system as well as for the wireless control system according to the present invention are described, whereby in any case different systems have to be used for the wireless telecommunication system and the wireless control system according to the present invention, so that interferences between the two systems are avoided. The wireless telecommunication system and the wireless control system can be based on the following principles:
Time Division Multiple Access (TDMA). Example implementations of cellular systems based on this principle are the ETSI Standard GSM, as described in Chapters 3-11 of "An Introduction to GSM" from Redl, Weber, Oliphant, Artech House, 1995; The Standards NADC, IS-54, IS-136, as described in Chapter 12 of this book; and RCR/ARIB PDC. Examples of cordless systems based on this principle are standardized as ETSI DECT, RCR/ARIB PHS, EIA PWT, and Bluetooth.
CDMA (Code Division Multiple Access), e.g. EIA/TIA IS-95, EIA/TIA IS-95A, EIA/TIA IS-95B, as described in Chapter 13 of "An Introduction to GSM" as mentioned above.
TD-CDMA (Time Division-Code Division Multiple Access).
Analog continuous-time transmission methods such as AM, FM, SSB.
Compressed time / time-slot versions of systems based on analog transmission methods.
Broadcast systems (FM, AM, COFDM, e.g. DAB).
Pager systems (POCSAG).
Optical/Infrared systems.
Acoustic/Ultrasonic systems.

Hereafter some advantageous types of implementations of transmission methods for the wireless control system of the present invention are considered.

It is suggested to use a short wavelength (decimeters and less) to determine a short range of protection around a mobile terminal, which is transmitting control signals of a wireless control system. Absorption in obstacles can be planned as desired. Natural propagation of RF waves causes a path attenuation which is proportional to 4π/λ*d², where d is the distance between transmitter and receiver and λ is the wavelength used. Typical home or office environments create even larger wave attenuation typically proportional to 4π/λ*d³ above a distance of about 10 meters.

Different possible implementations of the control system have each specific characteristics, advantages and disadvantages.

Radio frequency systems, i.e. systems, which use radio frequency protection signals, yield a good coverage range per transmitted power. A long range is therefore possible, depending on selected transmit power, receiver sensitivity, wavelength, and anticipated interference. An omni-directional radiator can be implemented easily in the protection signal transmitter, resulting in almost circular or spherical ranges. Radio frequency waves pass through some obstacles and encounter inflection, depending on the selected wavelength, therefore a line of sight between transmitter and receiver is usually not required. As an example, the control system could be implemented using Bluetooth as the basic standard.

Optical systems typically have a short range per transmitted power. Radiators are usually directional such as in the case of an LED. Some gain in range or transmit power reduction can be achieved by concentration of radiation. Omni-directional radiators are big and heavy. Scattering can remove the restrictions of directional radiators at the expense of transmit power. Optical systems can be implemented in a cost efficient way. Particularly transmitters can be very cheap. System approval can be obtained easily. Radiation does not pass through most of the common obstacles such as walls or furniture. That could be a desired feature. A line of sight path between transmitter and receiver is usually required. Optical systems generate few interference to other devices or services. Few health considerations arise from their use.
As an example, the control system could be implemented using infrared technology e.g. from home appliance remote controls as the basic standard.

Acoustic systems typically have a short to medium range. The required transmit power per range obtained is rather high. Typical systems have a directional radiator such as a piezoelectric speaker. Acoustic waves are scattered, inflected and reflected by most of the usual objects in home or office environments, therefore a line of sight between transmitter and receiver is usually not required. Radiation does not pass through most of the common obstacles such as walls, windows, furniture. System approval can be obtained easily. Acoustic systems generate few interference to other devices or services and only few health considerations arise from their use.
As an example, the control system could be implemented using ultrasonic technology e.g. from home appliance remote controls as the basic standard.

As a preferred example, the control system could be implemented using radio frequency technology based on "Bluetooth".
Bluetooth is a standard which is currently still under development. Bluetooth supports wireless ad-hoc voice and data connectivity. Bluetooth is a TDMA/TDD/FHSS system that operates in the unlicensed 2.4GHz ISM band, frequencies for its operation have been allocated worldwide. A range of 10 meters or even 100 meters (using higher transmit power) can be achieved. No line-of-sight is necessary for a successful communication.
Due to features like worldwide ad-hoc connectivity, low power, small size and ease of integration, Bluetooth is very well suited to the requirements of a control system according to this invention. A Bluetooth subsystem can be implemented on a single silicon chip. A Bluetooth subsystem can also be integrated into existing chip designs.

## Claims

1. Mobile terminal (400) for a wireless telecommunication system, with
transmitting and receiving means (420) for transmitting and receiving user and control signals of the wireless telecommunication system,
generating means (415) for generating control signals of a wireless control system, said control signals comprising control information for controlling settings or functions of one or more devices within a predetermined area, whereby said wireless control system is different from and has a shorter transmission range than said wireless telecommunication system, and
transmitting means (414) for transmitting said control signals to one or more of said devices within said predetermined area.

2. Mobile terminal (400) for a wireless telecommunication system according to claim 1,
**characterized in**,
that said transmitting means (414) regularly broadcasts said control signals.

3. Mobile terminal (400) for a wireless telecommunication system according to claim 1,
**characterized in**,
that said control signals are only generated and transmit by said transmitting means when a receiving means (411) of said mobile terminal receives signals from one of said devices within said predetermined area.

4. Mobile terminal (400) for a wireless telecommunication system according to claim 1, 2 or 3,
**characterized in**,
that said control signals comprise control information only for one of the devices in said predetermined area, whereby said one device controls settings or functions of other devices in said predetermined area.

5. Mobile terminal (400) for a wireless telecommunication system according to claim 1, 2 or 3,
**characterized in**,
that said control signals comprise control information to directly control settings or functions of devices within said predetermined area.

6. Mobile terminal (400) for a wireless telecommunication system according to one of the claims 1 to 5,
**characterized in**,
that said transmitting means (414) transmits said control signals in a frequency of the radio frequency range different from the frequency range of the wireless telecommunication system.

7. Mobile terminal (400) for a wireless telecommunication system according to claim 6,
**characterized in**,
that said frequency is in the GHz range.

8. Mobile terminal (400) for a wireless telecommunication system according to one of the claims 1 to 5,
**characterized in,**
that said transmitting means (414) transmits said control signals as infrared signals.

9. Mobile terminal (400) for a wireless telecommunication system according to one of the claims 1 to 8,
**characterized in,**
that said transmitting means (414) has a transmission power to transmit said control signals in a range of up to 50 m.

10. Method for controlling settings or functions of one or more devices within a predetermined area by means of a mobile terminal (400) of a wireless telecommunication system, said portable terminal comprising transmitting and receiving means for transmitting and receiving user and control signals of the wireless telecommunication system, comprising the steps of
generating control signals of a wireless control system in said portable terminal, said control signals comprising control information for controlling settings or functions of one or more devices within said predetermined area, whereby said wireless control system is different from and has a shorter transmission range than said wireless telecommunication system, and
transmitting said control signals to one or more of said devices within said predetermined area.

11. Method for controlling settings or functions of devices within a predetermined area according to claim 10,
**characterized in,**
that said control signals are regularly broadcast.

12. Method for controlling settings or functions of devices within a predetermined area according to claim 10,
**characterized in**,
that said control signals are only generated and transmit by said mobile terminal when said mobile terminal receives signals of said wireless control system from one of said devices in said predetermined area.

13. Method for controlling settings or functions of devices within a predetermined area according to claim 10, 11 or 12,
**characterized in**,
that said control signals comprise control information only for one of the devices in said predetermined area, whereby said one device controls settings or functions of other devices in said predetermined area.

14. Method for controlling settings or functions of devices within a predetermined area according to claim 10, 11 or 12,
**characterized in**,
that said control signals comprise control information to directly control settings or functions of devices within said predetermined area.

15. Method for controlling settings or functions of devices within a predetermined area according to one of the claims 10 to 14,
**characterized in**,
that said wireless control system operates in a frequency of the radio frequency range different from the frequency range of the wireless telecommunication system.

16. Method for controlling settings or functions of devices within a predetermined area according to claim 15,
**characterized in**,
that said frequency is in the GHz range.

17. Method for controlling settings or functions of devices within a predetermined area according to one of the claims 10 to 14,
**characterized in**,
that said wireless control system operates on the basis of infrared signals.

18. Method for controlling settings or functions of devices within a predetermined area according to one of the claims 10 to 17,
**characterized in**,
that said wireless control system operates in a range of up to 50 m.
